# EUROPEAN PATENT APPLICATION

(11) **EP 4 714 706 A1**
(43) Date of publication of application: **25.03.2026**
(21) Application number: 23937771.6
(22) Date of filing: 19.05.2023
(51) Int. Cl.: B60K 6/405, B60L 50/60

(54) **ELECTRIC VEHICLE**

(71) Applicant: Nissan Motor Co., Ltd., Yokohama-shi, Kanagawa 221-0023 (JP)
(72) Inventor: NAKAGAWA, Kenichi, Atsugi-shi, Kanagawa 243-0123 (JP)
(74) Representative: Global IP Europe Patentanwaltskanzlei
(86) International application number: PCT/JP2023/018783
(87) International publication number: WO 2024/241382

(57) **Abstract**

An electric vehicle is configured such that a motor room of the vehicle accommodates a drive device including an electric motor and an inverter device electrically connected to the electric motor above the electric motor, a vehicle auxiliary component fixed to the drive device, and a radiator disposed in front of the drive device in the vehicle and configured to allow cooling water to circulate through. The inverter device is accommodated in an inverter case provided on an upper portion of the drive device, and the vehicle auxiliary component is attached to the inverter case from above and disposed in a manner of protruding toward a front side of the vehicle beyond a front end of the inverter case.

## Description

### TECHNICAL FIELD

The present invention relates to an electric vehicle.

### BACKGROUND ART

In an electric vehicle in which an electric motor and an inverter device are accommodated in a motor room on a front side of the vehicle, it is required that high-voltage components such as an inverter device are not damaged during a frontal collision of the vehicle.

JP5712956B discloses an electric vehicle in which a case in which an inverter device and the like are housed moves to a rear side during a frontal collision of the vehicle to prevent damage to the case.

### SUMMARY OF INVENTION

The electric vehicle described above is configured such that another object directly comes into contact with the case of the inverter device and then the object moves to the rear side. Therefore, when a load during the contact is large, the case may still be damaged.

In view of such a problem, an object of the present invention is to provide an electric vehicle capable of more effectively preventing damage to a case of an inverter device during a frontal collision of the vehicle.

An embodiment of the present invention is applied to an electric vehicle. The electric vehicle is configured such that a motor room of the vehicle accommodates a drive device including an electric motor and an inverter device electrically connected to the electric motor above the electric motor, a vehicle auxiliary component fixed to the drive device, and a radiator disposed in front of the drive device in the vehicle and configured to allow cooling water to circulate through. The inverter device is accommodated in an inverter case provided on an upper portion of the drive device, and the vehicle auxiliary component is attached to the inverter case from above and disposed in a manner of protruding toward a front side of the vehicle beyond a front end of the inverter case.

### BRIEF DESCRIPTION OF DRAWINGS

[FIG. 1] FIG. 1 is a side view of a drive device of an electric vehicle according to the present embodiment.
[FIG. 2] FIG. 2 is a perspective view of the drive device.
[FIG. 3] FIG. 3 is a perspective view of the drive device.
[FIG. 4] FIG. 4 is a side view of a main part of the drive device.
[FIG. 5] FIG. 5 is a perspective view of a bracket.
[FIG. 6] FIG. 6 is a cross-sectional view of a boss.

### DESCRIPTION OF EMBODIMENTS

Hereinafter, an embodiment of the present invention will be described with reference to the accompanying drawings.

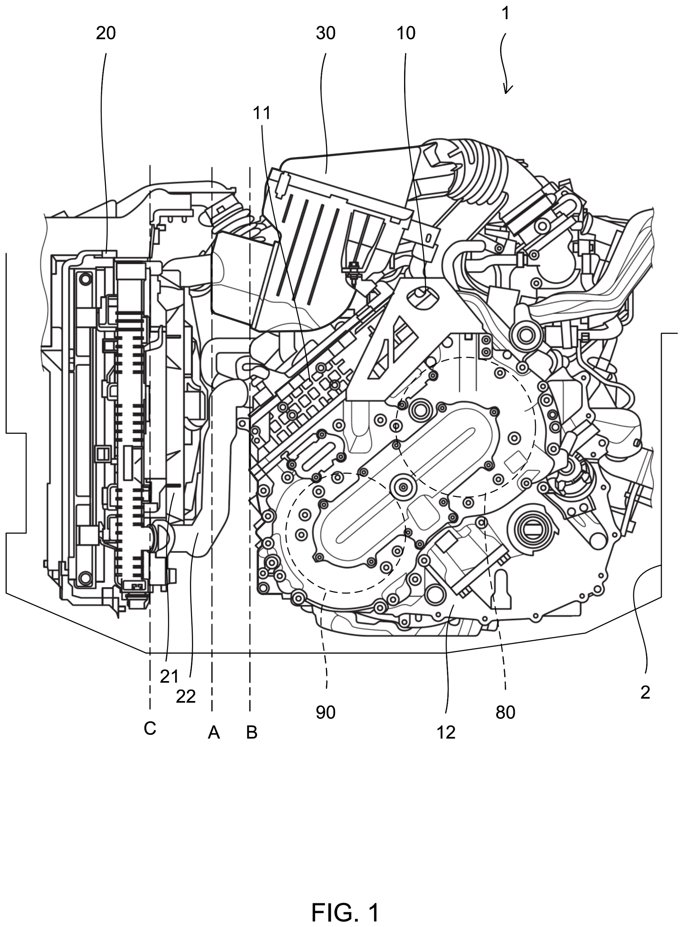

FIG. 1 is a diagram illustrating a drive device 10 of an electric vehicle 1 according to the present embodiment, and is a diagram as viewed from a side surface of a motor room 2 of the electric vehicle 1.

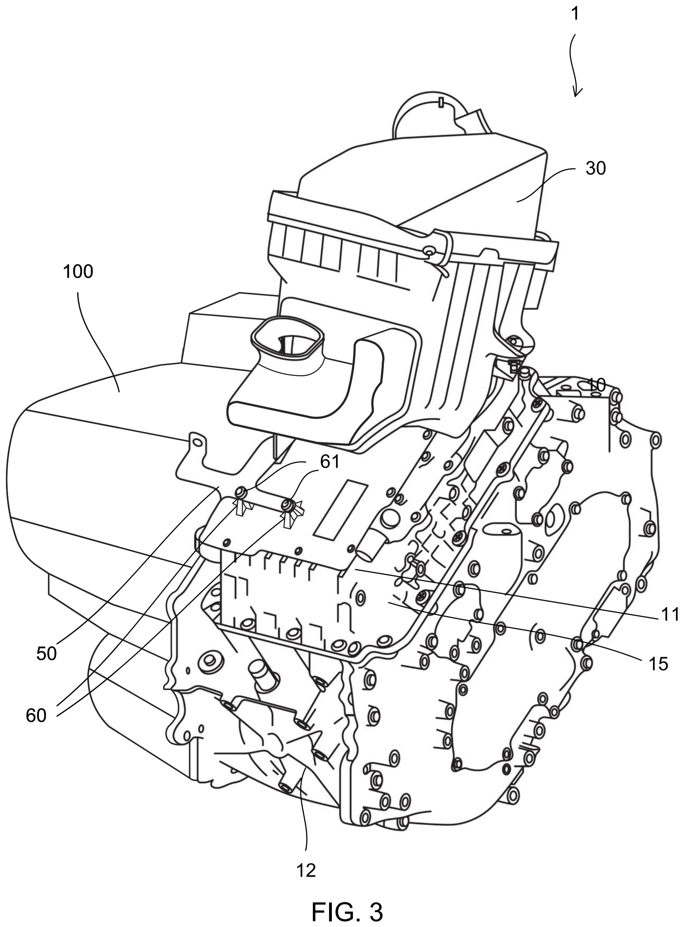

The drive device 10 includes an inverter device 11, an electric motor 80, a generator 90, and an engine 100 (see FIG. 3). The drive device 10 causes the electric vehicle 1 to travel by converting DC electric power of a battery (not illustrated) into AC electric power by the inverter device 11, supplying the AC electric power to the electric motor 80, and driving the electric motor 80.

The drive device 10 charges the battery with regenerative electric power of the electric motor 80 via the inverter device 11 during deceleration of the electric vehicle 1. Note that the drive device 10 can also cause the generator 90 to generate electric power by being driven by the engine 100, and supply the generated electric power to the electric motor 80 via the inverter device 11 to drive the electric motor 80 or charge the battery.

Note that although an example in which the drive device 10 of the present embodiment is configured as a hybrid vehicle including the electric motor 80, the generator 90, and the engine 100 will be described, the present invention is not limited to this configuration. The electric vehicle 1 may include the inverter device 11 and the electric motor 80 as a drive force source, and may not include the generator 90 and the engine 100.

In the drive device 10, the electric motor 80 and the generator 90 are arranged in a housing 12 such that rotation shafts thereof are parallel to each other. The inverter device 11 is disposed above the electric motor 80 and the generator 90.

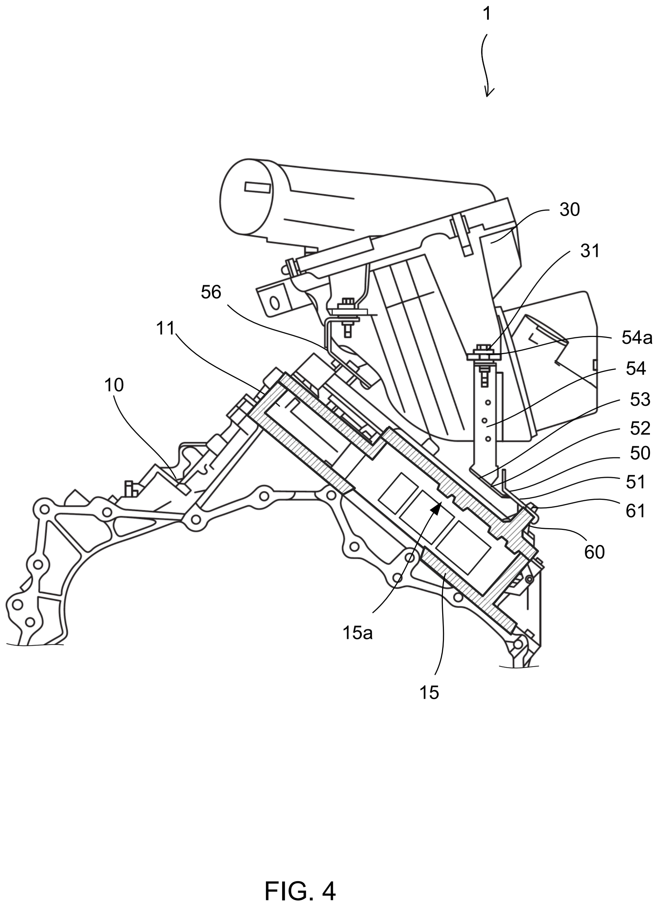

The inverter device 11 is accommodated in an inverter case 15 that forms a space independent of the housing 12 in which the electric motor 80 and the generator 90 are accommodated (see FIG. 4). The inverter device 11 is configured such that electrical components such as a power module and a capacitor are accommodated in the inverter case 15. The inverter case 15 is disposed inclined toward a front side in the drive device 10.

As illustrated in FIGS. 1 and 3, the engine 100 is disposed on one side of side surfaces of the electric motor 80 and the generator 90. The engine 100 is coupled to the generator 90 via a gear or the like and drives the generator 90.

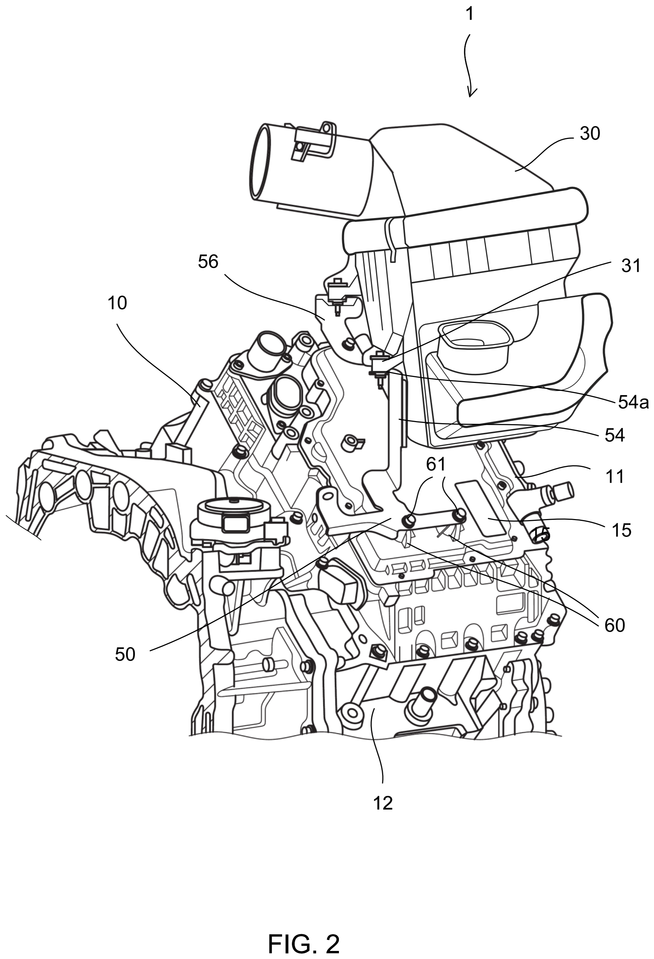

As illustrated in FIGS. 1 and 2, an air cleaner 30 as a vehicle auxiliary component constituting an intake device of the engine 100 is disposed above the drive device 10 (above the inverter device 11). The air cleaner 30 is made of resin and has a space including an air filter, a resonator, and the like therein. The air cleaner 30 is disposed at an upper portion of the drive device 10 by brackets (a front bracket 50 and a rear bracket 56) fixed to an upper surface of the inverter case 15.

As illustrated in FIG. 1, in the motor room 2, a radiator 20 is disposed at a front side of the drive device 10 (front side in a front-rear direction of the vehicle). Cooling water for cooling the drive device 10 circulates through the radiator 20. The radiator 20 includes a large number of fins and pipes made of, for example, aluminum. A fan 21 and a cooling water pipe 22 are fixed to the radiator 20.

Next, a case where a large load is input to the motor room 2 from the front side during a collision of the vehicle in the electric vehicle 1 configured as described above will be described.

When a large load is input from the front side of the vehicle during a collision of the vehicle or the like, the radiator 20 may move to the rear side in the motor room 2 and come into contact with the drive device 10.

In the related art, when a component in a motor room such as a radiator is in direct contact with an inverter device of a drive device, an inverter case of the inverter device may be damaged and a high-voltage component may be exposed.

Therefore, in the present embodiment, damage to the inverter case 15 of the inverter device 11 is prevented by the following configuration.

As illustrated in FIG. 1, the air cleaner 30 is disposed in manner of protruding toward the front side beyond a front end of the inverter case 15. More specifically, a front end A of the air cleaner 30 is disposed in front of a front end B of the inverter case 15. That is, the front end A of the air cleaner 30 is disposed at a position closer to a rear end C of the radiator 20 than the front end B of the inverter case 15. Note that as illustrated in FIG. 1, in the present embodiment, the front end of the inverter case 15 is configured at substantially the same position as the front end of the drive device 10, but the front end of the inverter case 15 may be disposed in front of the front end of the drive device 10.

With this configuration, when a large load is input from the front side of the electric vehicle 1 during a frontal collision or the like and the radiator 20 moves toward the drive device 10 side, the radiator 20 collides with the air cleaner 30 before the inverter case 15.

The air cleaner 30 is a resin component having a cavity therein, and the radiator 20 includes a large number of aluminum fins. Therefore, when the air cleaner 30 collides with the radiator 20, the air cleaner 30 and the radiator 20 are deformed to absorb an impact during the collision.

Therefore, when a large load is input from the front side of the electric vehicle 1, the radiator 20 is prevented from directly colliding with the inverter case 15. The impact at this time is buffered by the contact between the radiator 20 and the air cleaner 30. As a result, damage to the inverter case 15 can be prevented more effectively.

Next, an attachment structure of the air cleaner 30 will be described.

As illustrated in FIG. 2, the air cleaner 30 is attached to the drive device 10 from above via the front bracket 50 and the rear bracket 56.

A pair of bosses 60 are formed in a protruding manner from the upper surface on the front side of the inverter case 15. A fixed portion 51 of the front bracket 50 is screwed to the pair of bosses 60 by a pair of bolts 61, so that the front bracket 50 is fixed to the upper surface of the inverter case 15. The front bracket 50 includes an erecting portion 54 erecting upward, and a front attachment portion 31 of the air cleaner 30 is fixed to an air cleaner fixing portion 54a formed at an upper end portion of the erecting portion 54.

Similarly, the rear bracket 56 is fixed to a rear side of the inverter case 15. The rear bracket 56 is fixed to the upper surface of the inverter case 15 at a front end side thereof. The rear bracket 56 is fixed at a rear end side thereof so as to support the air cleaner 30 from a lower side.

As described above, the air cleaner 30 is supported by the front bracket 50 and the rear bracket 56, and thus is disposed above the drive device 10 in a state of being arranged apart from the upper surface of the inverter case 15.

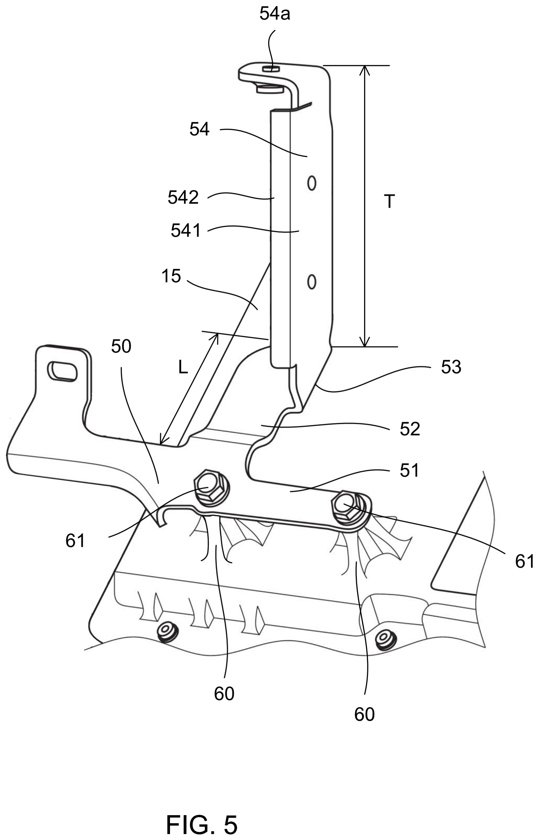

FIG. 5 is a diagram illustrating the front bracket 50.

The front bracket 50 is formed by bending a plate-like metal flat plate. The front bracket 50 includes the fixed portion 51 fixed to the bosses 60 of the inverter case 15, an extension portion 52 extending from the fixed portion 51 toward the rear side of the vehicle, a bent portion 53 that is a portion bent upward at a rear end of the extension portion 52, and an erecting portion 54 erecting from the bent portion 53 toward an upper side of the extension portion 52.

The fixed portion 51 and the extension portion 52 are formed in a planar shape facing the upper surface of the inverter case 15. The erecting portion 54 is formed such that a plane thereof extends in the front-rear direction. Note that the erecting portion 54 is configured such an erecting length thereof (T in FIG. 5) is greater than an extension length (L in FIG. 5) of the extension portion 52 (for example, T:L = 2:1).

The fixed portion 51 is fixed to the pair of bosses 60 formed in a manner of erecting from the upper surface of the inverter case 15 by the pair of bolts 61. In this way, the fixed portion 51 and the extension portion 52 are disposed apart from the upper surface of the inverter case 15 by an erecting length of the boss 60.

Note that the fixed portion 51 has a portion extending in the vehicle width direction toward a right side of the vehicle (a left side in FIG. 5). Another component (for example, a clamp of a harness) related to the drive device 10 is fixed to this portion.

The erecting portion 54 includes a wall portion 541 having a plane in the front-rear direction and a flange portion 542 bent in the vehicle width direction on a front side of the wall portion 541. The erecting portion 54 has an air cleaner fixing portion 54a formed by bending in the vehicle width direction at an upper end portion thereof. The air cleaner fixing portion 54a is fixed to a lower surface of the front attachment portion 31 of the air cleaner 30.

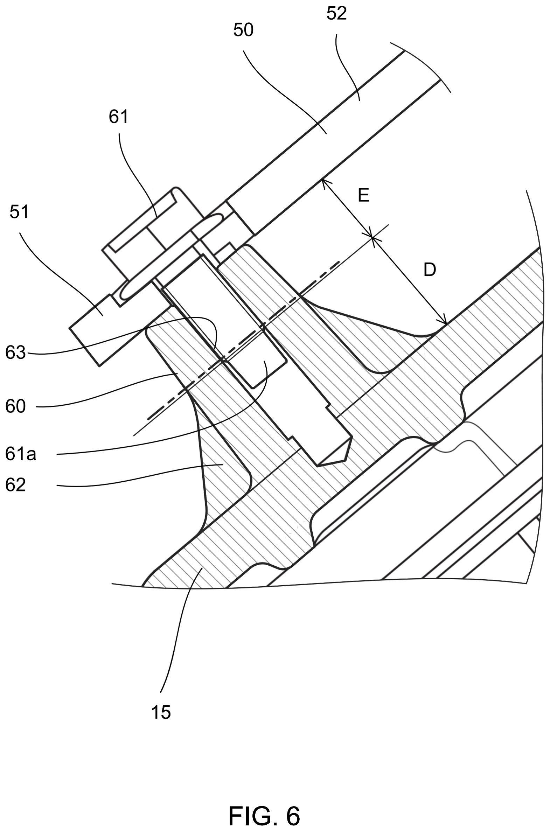

FIG. 6 is a cross-sectional view of the boss 60. The boss 60 is formed by protruding from the upper surface of the inverter case 15. The boss 60 includes a bolt hole 63 into which the bolt 61 for fixing the front bracket 50 is screwed, and reinforcing ribs 62 formed by erecting from the upper surface of the inverter case 15 along a side surface of the boss 60 around the boss 60. The reinforcing ribs 62 are provided, for example, at four portions around the boss 60.

The bolt hole 63 of the boss 60 penetrates through the boss 60 by the erecting length of the boss 60, and the bolt 61 is screwed into the bolt hole 63 at a position (E in FIG. 6) higher than an erecting length (D in FIG. 6) of the reinforcing rib 62. A tip portion 61a of the bolt 61 is configured as a tapered pilot portion without any screw. The tip portion 61a is inserted into a portion (portion D) of the reinforcing rib 62, but is not fixed to the boss 60 since the tip portion 61a has no screw.

In such a configuration, when a large load is input from the front side of the electric vehicle 1 and the radiator 20 comes into contact with the air cleaner 30, a rearward load is applied to the air cleaner 30. In this case, the front bracket 50 supporting the air cleaner 30 is deformed by the rearward load such that the extension portion 52 is bent in a thickness direction with the fixed portion 51 as a fulcrum. Accordingly, first, the front bracket 50 comes into contact with the upper surface of the inverter case 15 near the bent portion 53 of the extension portion 52.

Here, as illustrated in FIG. 4, in the inverter case 15, a reinforcing portion 15a that increases a thickness of the inverter case 15 is formed at a position facing the bent portion 53 for the purpose of increasing strength in a thickness direction of the inverter case 15. The reinforcing portion 15a is constituted by a rib or a protrusion formed on an inner surface or an outer surface of the inverter case 15.

With this configuration, when the bent portion 53 of the front bracket 50 comes into contact with the upper surface of the inverter case 15 at the position of the reinforcing portion 15a, the erecting portion 54 of the front bracket 50 serves as a point where force is applied and the bent portion 53 serves as a fulcrum, so that an upward load is applied to the fixed portion 51 by the principle of leverage.

Note that in this case, since the inverter case 15 has the reinforcing portion 15a at the portion with which the bent portion 53 of the front bracket 50 comes into contact, damage that occurs when the front bracket 50 comes into contact with the upper surface of the inverter case 15 is prevented. Since the erecting portion 54 includes the wall portion 541 having a plane in the front-rear direction and the flange portion 542, rigidity thereof in the front-rear direction is high, and therefore, an upward load can be more effectively applied to the fixed portion 51 without being deformed by the input load.

Here, in the boss 60, a connection part (indicated by a one-dot chain line in FIG. 6) between a portion (E in FIG. 6) where the bolt 61 is screwed and a portion (D in FIG. 6) having the reinforcing rib 62 is structurally weak. That is, the connection part is configured such that the bolt 61 is not inscribed in the bolt hole 63 at the tip of the bolt 61 and is not formed with the reinforcing rib 62.

Therefore, when an upward load is applied to the fixed portion 51, the boss 60 is broken at the connection part where the reinforcing rib 62 is not formed.

Therefore, when a large load is input from the front side of the electric vehicle 1, the radiator 20 and the air cleaner 30 come into contact with each other, and the front bracket 50 for fixing the air cleaner 30 is broken at the portion of the boss 60 by the load from the front side at this time, so that it is possible to avoid such damage that the inside of the inverter case 15 is exposed to the outside.

When the boss 60 is broken, the front bracket 50 moves to the rear side while being fixed to the air cleaner 30. In this case, since the air cleaner 30 is supported by the rear bracket 56, the air cleaner 30 moves in a manner of pivoting about the rear bracket 56 in a direction away from the upper surface of the inverter case 15. In this way, the boss 60 is broken and the air cleaner 30 moves, so that the input load is buffered and the damage to the inverter case 15 is prevented.

As described above, in the present embodiment, the electric vehicle 1 is described, in which the drive device 10 including the electric motor 80 and the inverter device 11 electrically connected to the electric motor 80 above the electric motor 80, the air cleaner 30 as a vehicle auxiliary component fixed to the drive device 10, and the radiator 20 that is disposed in front of the drive device 10 in the vehicle and configured to allow cooling water to circulate through are accommodated in the motor room 2. The inverter device 11 includes the inverter case 15 provided at the upper portion of the drive device 10. The air cleaner 30 is attached to the inverter case 15 from above, and is disposed in a manner of protruding toward the front side of the vehicle beyond the front end of the inverter case 15.

With this configuration, when a large load is input from the front side of the electric vehicle 1 during a frontal collision or the like, the air cleaner 30 collides with the radiator 20 before the inverter case 15, so that the impact during collision is buffered, and therefore, it is possible to effectively prevent the damage to the inverter case 15 of the inverter device 11.

In the present embodiment, the air cleaner 30 is supported by the front bracket 50 fixed to the upper surface of the inverter case 15. The front bracket 50 includes the fixed portion 51 fixed to the upper surface of the inverter case 15, the extension portion 52 extending from the fixed portion 51 toward the rear side of the vehicle, the bent portion 53 bent upward at the rear end of the extension portion 52, and the erecting portion 54 erecting from the extension portion 52 via the bent portion 53 and fixed to the air cleaner 30, and the extension portion 52 and the bent portion 53 are disposed apart from the upper surface of the inverter case 15.

With this configuration, since the extension portion 52 and the bent portion 53 of the front bracket 50 supporting the air cleaner 30 are arranged apart from the upper surface of the inverter case 15, when a load is input from the front side, the extension portion 52 and the bent portion 53 are bent to move the air cleaner 30 to the rear side, so that the load can be buffered.

In the present embodiment, the inverter case 15 includes the reinforcing portion 15a that increases the strength in the thickness direction of the inverter case 15 at a position facing the bent portion 53.

With this configuration, even when the front bracket 50 is bent and the bent portion 53 comes into contact with the inverter case 15, damage to the inverter case 15 itself is prevented by the reinforcing portion 15a.

In the present embodiment, the front bracket 50 is formed such that the erecting length of the erecting portion 54 is greater than the extension length of the extension portion 52.

With this configuration, the erecting portion 54, having a length greater than that of the extension portion 52, allows an upward load to be applied to the fixed portion 51 with the bent portion 53 as a fulcrum by the principle of leverage without damaging the inverter case 15.

In the present embodiment, the inverter case 15 includes the bosses 60 protruding from the upper surface of the inverter case 15, each of the bosses 60 includes the bolt hole 63 into which the bolt 61 is screwed, and the reinforcing ribs 62 formed by erecting from the upper surface of the inverter case 15 along the side surface of the boss 60 around the boss 60, and the bolt 61 is screwed into the bolt hole 63 at a position higher than the erecting length of the reinforcing ribs 62.

With this configuration, since the connection part between the portion where the bolt 61 is screwed and the portion formed with the reinforcing ribs 62 is configured to be structurally weak, when an upward load is applied to the fixed portion 51, the connection part is broken, so that the damage to the inverter case 15 itself is prevented.

In the present embodiment, the erecting portion 54 includes the wall portion 541 having a plane in the front-rear direction and the flange portion 542 bent in the vehicle width direction at the front end of the wall portion.

With this configuration, since the erecting portion 54 is configured to have high rigidity in the front-rear direction, an upward load can be applied to the fixed portion 51 without being deformed by the input load.

In the present embodiment, the drive device 10 further includes the generator 90 and the engine 100 that causes the generator 90 to generate electric power, and the vehicle auxiliary component is the air cleaner 30 provided in the intake device of the engine 100.

With this configuration, the air cleaner 30, which is a resin component provided in the engine 100 and having a cavity therein, collides with the radiator 20 before the inverter case 15, so that the impact during a collision can be buffered.

Although the embodiment of the present invention has been described above, the configurations described in the above-described embodiment and modifications are merely examples of applications of the present invention, and are not intended to limit the technical scope of the invention.

In the above-described embodiment, the air cleaner 30 has been described as an example of the vehicle auxiliary component, but the vehicle auxiliary component is not limited thereto. As the vehicle auxiliary component, for example, a fuse box or a resin cover of the drive device 10 may be fixed via a bracket as described above.

## Claims

1. An electric vehicle, comprising:
a motor room configured to accommodate
a drive device including an electric motor and an inverter device electrically connected to the electric motor above the electric motor,
a vehicle auxiliary component fixed to the drive device, and
a radiator disposed in front of the drive device in the vehicle and configured to allow cooling water to circulate through, wherein
the inverter device is accommodated in an inverter case provided on an upper portion of the drive device, and
the vehicle auxiliary component is attached to the inverter case from above and disposed in a manner of protruding toward a front side of the vehicle beyond a front end of the inverter case.

2. The electric vehicle according to claim 1, wherein
the vehicle auxiliary component is supported by a bracket fixed to an upper surface of the inverter case,
the bracket includes
a fixed portion fixed to the upper surface of the inverter case,
an extension portion extending from the fixed portion toward a rear side of the vehicle,
a bent portion bent upward at a rear end of the extension portion, and
an erecting portion erecting from the extension portion via the bent portion and fixed to the vehicle auxiliary component, and
the extension portion and the bent portion are disposed apart from the upper surface of the inverter case.

3. The electric vehicle according to claim 2, wherein
the inverter case is provided with, at a position facing the bent portion, a reinforcing portion for increasing strength in a thickness direction of the inverter case.

4. The electric vehicle according to claim 2, wherein
the bracket is formed such that an erecting length of the erecting portion is greater than an extension length of the extension portion.

5. The electric vehicle according to claim 2, wherein
the inverter case includes a boss protruding from the upper surface of the inverter case,
the boss includes
a bolt hole into which a bolt for fixing the fixed portion is fixed, and
a reinforcing rib formed in a manner of erecting from the upper surface of the inverter case around the boss and along a side surface of the boss, and
the bolt is fixed into the bolt hole at a position higher than an erecting length of the reinforcing rib.

6. The electric vehicle according to claim 2, wherein
the erecting portion includes a wall portion having a flat surface in a front-rear direction and a flange portion bent in a vehicle width direction at a front end of the wall portion.

7. The electric vehicle according to claim 1, wherein
the drive device further includes a generator and an engine that causes the generator to generate electric power, and
the vehicle auxiliary component is an air cleaner provided in an intake device of the engine.
